(19) Europäisches Patentamt
European Patent Office
Office européen des brevets

(11) EP 1 400 821 A2

(12) EUROPEAN PATENT APPLICATION

(43) Date of publication:
24.03.2004 Bulletin 2004/13

(51) Int Cl.[7]: G02B 6/132

(21) Application number: 03019538.2

(22) Date of filing: 01.09.2003

(84) Designated Contracting States:
AT BE BG CH CY CZ DE DK EE ES FI FR GB GR HU IE IT LI LU MC NL PT RO SE SI SK TR
Designated Extension States:
AL LT LV MK

(30) Priority: 20.09.2002 JP 2002275675

(71) Applicants:
- Kokubun, Yasuo
  Yokohama-shi, Kanagawa 247-0009 (JP)
- Semiconductor Process Laboratory Co., Ltd.
  Ichikawa-shi, Chiba 272-0001 (JP)

(72) Inventors:
- Kokubun, Yasuo
  Yokohama-shi Kanagawa 247-0009 (JP)
- Shioya, Yoshimi,
  Semiconductor Process Lab. Co., L
  Ichikawa-shi Chiba 272-0001 (JP)
- Maeda, Kazuo,
  Semiconductor Process Lab. Co., Ltd.
  Ichikawa-shi Chiba 272-0001 (JP)

(74) Representative: Schwabe - Sandmair - Marx
Stuntzstrasse 16
81677 München (DE)

# (54) Optical waveguide and method of manufacturing the same

(57) The present invention relates to an optical waveguide constituting an optical integrated circuit and a method of manufacturing the same. In a method of manufacturing an optical waveguide having a core layer 22a, 22b, 23b and a cladding layer 23a, 24 for covering the core layer 22a, 22b, 23b, a silicon nitride film serving as the core layer 22a, 22b, 23b is formed by plasmanizing a gas mixture containing methylsilane and at least any one of nitrogen ($N_2$) or ammonia ($NH_3$) to react.

FIG. 5A

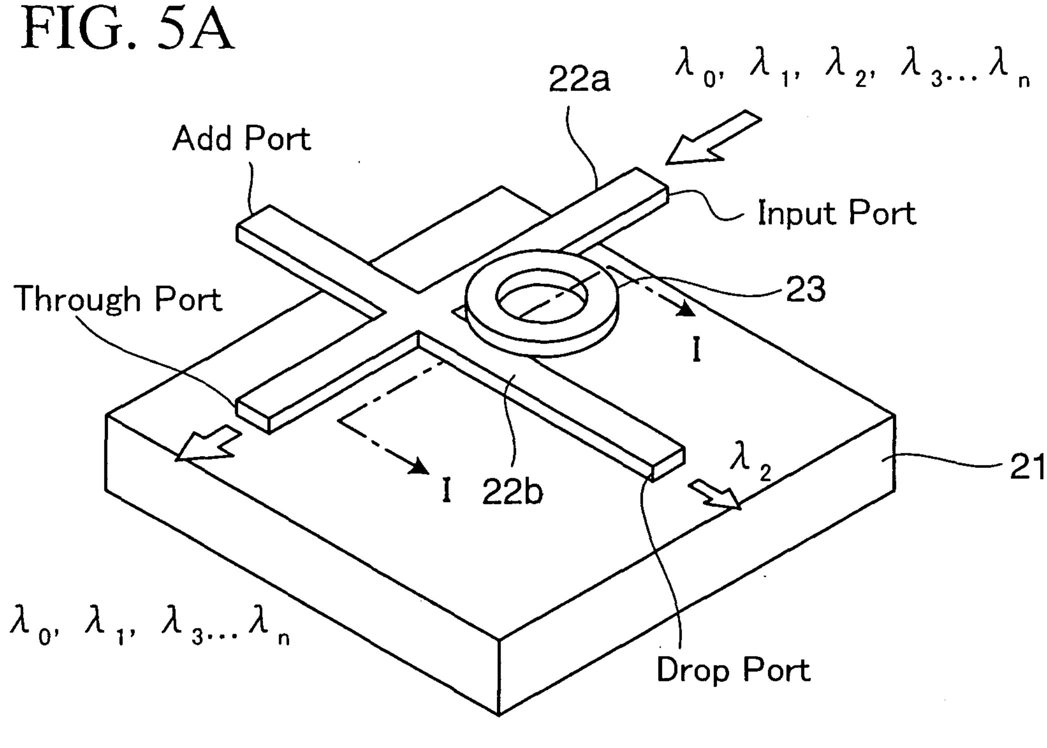


EP 1 400 821 A2

FIG. 5B

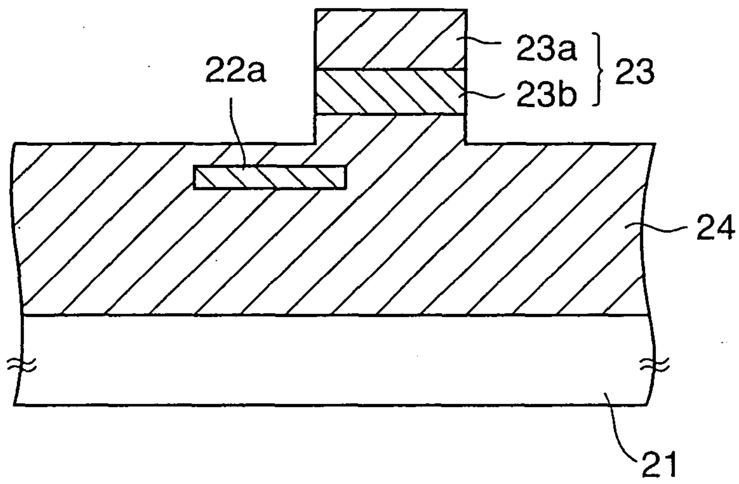

## Description

### BACKGROUND OF THE INVENTION

1. Field of the Invention

The present invention relates to an optical waveguide constituting an optical integrated circuit device and a method of manufacturing the same.

2. Description of the Prior Art

In recent years, the higher integration density and the higher density of the optical integrated circuit device are required. Accompanying with this, in order to enhance a propagation efficiency of the light, it is required to increase difference in the refractive index between the core layer, which mainly propagates the light, and the cladding layer, which covers the core layer, constituting the optical waveguide. In particular, 1.55 μm is used as the wavelength of the light in the communication field. At present, in this wavelength bandwidth, the film in which Ge or P is added to $SiO_2$ is employed as the core layer and also the $SiO_2$ film is employed as the cladding layer.

However, according to the current technology, difference in the refractive index between the core layer and the cladding layer is very small such as 0.04, and the permeation of the propagated light into the cladding layer and the loss are still large. Also, there was such a problem that, since the refractive index itself is small, patterns of the optical devices such as the resonator, etc. are increased in size.

### SUMMARY OF THE INVENTION

It is an object of the present invention to provide an optical waveguide capable of increasing a refractive index itself of a core layer and increasing difference in the refractive index between the core layer and a cladding layer, and a method of manufacturing the same.

Advantages attained based on the above configuration of the present invention will be explained hereunder.

In the present invention, the silicon nitride film serving as the core layer is formed by plasmanizing the gas mixture containing methylsilane and at least any one of nitrogen ($N_2$) or ammonia ($NH_3$) to react.

According to the experiment, the silicon nitride film with the large refractive index such as about 2 can be formed by the above gas mixture. In addition, the film having the good refractive index distribution and the good film thickness distribution could be obtained. Since the core layer has the large refractive index by employing this silicon nitride film as the core layer, patterns of the optical devices such as the resonator, etc. could be reduced in size. Further, since the film having the good refractive index distribution and the good film thickness distribution can be obtained, uniformization of device characteristics in the wafer could be achieved.

Also, the silicon oxy-nitride film serving as the core layer or the cladding layer is formed by plasmanizing the gas mixture containing any one of methylsilane, alkyl compound having the siloxane bond, or alkyl compound having the alkoxy bond, dinitrogen monoxide ($N_2O$), and at least any one of the nitrogen ($N_2$) or the ammonia ($NH_3$) to react.

According to the experiment, the refractive index of the silicon oxy-nitride film to be formed could be adjusted in the wide range from about 2 to about 1.4 by controlling the flow rate of dinitrogen monoxide ($N_2O$) in the gas mixture having the above constitution. Therefore, the silicon oxy-nitride film can be employed as the core layer or the cladding layer.

Also, the silicon oxide film serving as the cladding layer is formed by plasmanizing the gas mixture containing methylsilane and dinitrogen monoxide ($N_2O$) to react.

According to the experiment, the silicon oxide film having the small refractive index of about 1.4 could be formed by using the above gas mixture. Also, the film having the good refractive index distribution and the good film thickness distribution could be obtained.

In addition, if the core layer is formed of the above silicon nitride film or the silicon oxy-nitride film and the cladding layer is formed of the above silicon oxide film or the silicon oxy-nitride film, difference in the refractive index between the core layer and the cladding layer can be increased up to about 0.5 to 0.6. It results in effective suppression of the permeation of the light propagated through the core layer into the cladding layer and the loss.

Also, by a combination of above manufacturing methods, both the core layer and the cladding layer can be formed by only the plasma CVD method. Therefore, control of the film thickness can be facilitated. It leads to not only the reduction in size of the patterns of the optical devices due to the higher refractive index but also the higher integration density and the higher density of the optical integrated circuit device.

BRIEF DESCRIPTION OF THE DRAWINGS

FIG. 1 is a side view showing a configuration of a plasma CVD apparatus employed in optical waveguide manufacturing methods as embodiments of the present invention;
FIG.2 is a table showing combinations of particularly effective gases constituting a film forming gas employed in the optical waveguide manufacturing method as the embodiment of the present invention;
FIG.3 is a graph showing a refractive index in-plane distribution and a film thickness in-plane distribution of a silicon nitride film formed under the film forming conditions I for the optical waveguide manufacturing method according to a first example of the present invention;
FIG.4 is a graph showing a refractive index in-plane distribution and a film thickness in-plane distribution of a silicon nitride film formed under the film forming conditions II for the optical waveguide manufacturing method according to a second example of the present invention; and
FIG.5A is a perspective view showing a configuration of an optical integrated circuit device round a ring resonator as the embodiment, and FIG.5B is a sectional view taken along a I-I line in FIG.5A.

DESCRIPTION OF THE PREFERRED EMBODIMENTS

Embodiments of the present invention will be explained with reference to the drawings hereinafter.

(Explanation of a plasma CVD apparatus used in a film forming method as an embodiment of the present invention)

FIG.1 is a side view showing a configuration of a parallel-plate plasma CVD apparatus 101 employed in an optical waveguide manufacturing method according to the embodiment of the present invention.

This plasma CVD apparatus 101 consists of a film forming portion 101A as a portion at which a silicon-containing insulating film serving as the core layer or the cladding layer is formed on a substrate 21 subject to film-forming by the plasma gas, and a film-forming gas supplying portion 101B having a plurality of gas supply sources constituting film forming gases.

As shown in FIG.1, the film forming portion 101A has a chamber 1 whose inner pressure can be lowered, and this chamber 1 is connected to an exhausting apparatus 6 via an exhaust piping 4. An opening/closing valve 5 for controlling communication/uncommunication between the chamber 1 and the exhausting apparatus 6 is provided to the middle of the exhaust piping 4. A pressure measuring means such as a vacuum gauge (not shown) for monitoring the pressure in the chamber 1 is provided to the chamber 1.

A pair of opposing electrodes, i.e., an upper electrode 2 and a lower electrode 3, are provided to the inside of the chamber 1. A high-frequency power supply (RF power supply) 7 for supplying a high-frequency power of a frequency 13.56 MHz is connected to the upper electrode 2. A low-frequency power supply 8 for supplying a low-frequency power of a frequency 380 kHz is connected to the lower electrode 3. The film forming gas is plasmanized by supplying the high-frequency power to the upper electrode 2 from at least the high-frequency power supply 7 out of these power supplies 7, 8. The upper electrode 2, the lower electrode 3, and the power supplies 7, 8 constitute a plasma generating means that plasmanizes the film forming gas.

In this case, the low-frequency power having not only the frequency of 380 kHz but also the frequency of 50 kHz to 1 MHz may be applied to the lower electrode 3. Also, the high-frequency power having not only the frequency of 13.56 MHz but also the frequency of 1 MHz or more may be applied to the upper electrode 2 that opposes to the lower electrode 3. In addition, in FIG.1, the high-frequency power supply is connected to the upper electrode 2 and the low-frequency power supply is connected to the lower electrode 3. However, the high-frequency power supply 7 is not limited to the connection to the upper electrode 2, and also the low-frequency power supply 8 is not limited to the connection to the lower electrode 3. The high-frequency power supply 7 may be connected to any one of the upper electrode 2 and also the low-frequency power supply 8 may be connected to other electrode. Even by this constitution, the object of the present invention can be attained.

The upper electrode 2 is also used as a distributor of the film forming gas. A plurality of through holes are formed in the upper electrode 2, and opening portions of the through holes on the opposing surface to the lower electrode 3 act as discharge ports (introduction ports) of the film forming gas. The discharge ports are connected to the film-forming gas supplying portion 101B via a piping 9a. Also, if the case may be, a heater (not shown) may be provided to the upper electrode 2. This is because, if the upper electrode 2 is heated around the temperature of almost 100 °C during the film formation, particles made of the reaction product of the film forming gas can be prevented from adhering to the upper electrode 2.

The lower electrode 3 is also used as a loading table of the substrate 21 subject to film-forming. Also, the

lower electrode 3 has a heater 12 for heating the substrate 21 subject to film-forming loaded on the loading table.

In the film-forming gas supplying portion 101B, a supply source of methylsilane represented by a general formula $SiH_n(CH_3)_{4-n}$ (n=0 to 3), a supply source of alkyl compound having the siloxane bond such as hexamethyldisiloxane (HMDSO: $(CH_3)_3Si-O-Si(CH_3)_3$), or the like, a supply source of alkyl compound having the alkoxy bond, a supply source of ammonia ($NH_3$), a supply source of dinitrogen monoxide ($N_2O$), a supply source of at least any one of He or Ar (rare gas), and a supply source of nitrogen ($N_2$) as an inert gas are provided.

These gases are supplied appropriately to the inside of the chamber 1 of the film forming portion 101A via branch pipings 9b to 9h and a piping 9a to which these branch pipings 9b to 9h are connected. Flow-rate adjusting means 11a to 11g and opening/closing means 10b to 10u for controlling communication/uncommunication of the branch pipings 9b to 9h are provided in the middle of the branch pipings 9b to 9h. Also, an opening/closing means 10a for executing close/open of the piping 9a is provided in the middle of the piping 9a. In addition, in order to purge residual gases in the branch pipings 9b to 9f by flowing the $N_2$ gas through them, opening/closing means 10p to 10u are provided in order to control communication/uncommunication between the branch piping 9h connected to the $N_2$ gas supply source and other branch pipings 9b to 9g. In this case, the $N_2$ gas is also used to purge residual gases in the piping 9a and the chamber 1 in addition to the branch pipings 9b to 9g. Also, the $N_2$ gas is also used as the film forming gas.

The above film forming apparatus 101 is provided with the supply source of methylsilane represented by a general formula $SiH_n(CH_3)_{4-n}$ (n=0 to 3), the supply source of alkyl compound having the siloxane bond such as hexamethyldisiloxane (HMDSO), or the like, the supply source of alkyl compound having the alkoxy bond, the supply source of ammonia ($NH_3$), the supply source of dinitrogen monoxide ($N_2O$), the supply source of at least any one of He or Ar (rare gas), and the supply source of nitrogen ($N_2$) as an inert gas, and also plasma generating means 2, 3, 7, 8 for plasmanizing the film forming gas.

As a result, the core layer made of a silicon nitride film or a silicon oxy-nitride film, which has a high refractive index, and the cladding layer made of a silicon oxide film or the silicon oxy-nitride film, which has a low refractive index, can be formed employing the plasma CVD method described later.

Next, an explanation will be performed hereunder with respect to methylsilane, alkyl compound having the siloxane bond, and alkyl compound having the alkoxy bond, which are as the film forming gas employed in the present invention.

As typical examples, followings may be employed.

(i) methylsilane $(SiH_nCH_3)_{4-n}$ :n=0 to 3)
monomethylsilane ($SiH_3(CH_3)$)
dimethylsilane ($SiH_2(CH_3)_2$)
trimethylsilane ($SiH(CH_3)_3$)
tetramethylsilane ($Si(CH_3)_4$)
(ii) alkyl compound having the siloxane bond hexamethyldisiloxane (HMDSO: $(CH_3)_3Si-O-Si(CH_3)_3$) octamethylcyclotetrasiloxane (OMCTS)

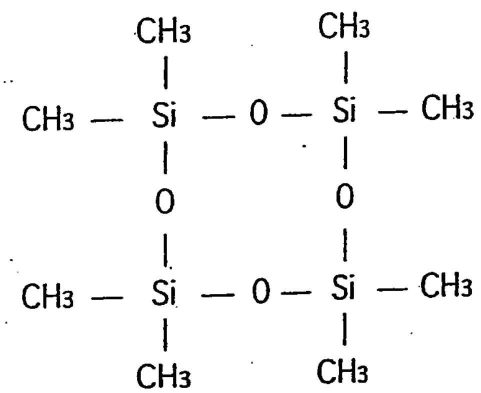

octamethyltrisiloxane (OMTS)

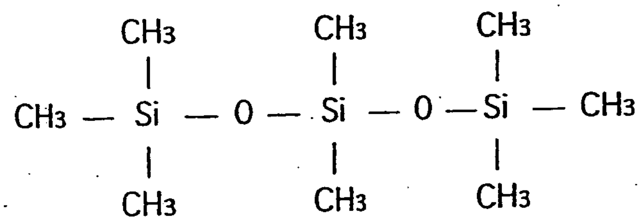

(iii) alkyl compound having the alkoxy bond dimethyldimethoxysilane ($Si(CH_3)_2(OCH_3)_2$) dimethyldiethoxysilane ($Si(CH_3)_2(OC_2H_5)_2$) trimethoxysilane (TMS: $SiH(OCH_3)_3$)

(Explanation of the film forming method as the embodiment of the present invention)

Next, particularly effective combination of gases constituting the film forming gas employed in the optical waveguide manufacturing method as the embodiment of the present invention will be explained with reference to FIG. 2 hereunder.

FIG.2 is a table showing respective combinations of gases constituting the film forming gas to form the silicon nitride film (SiN film), the silicon oxy-nitride film (SiON film), and the silicon oxide film (SiO film), which serves as the core layer or the cladding layer. In the following, particularly effective constitutions of the film forming gas will be listed concretely in compliance with the indication of formed films in FIG.2.

(i) Constitutive gases of the film forming gas to form the silicon nitride film (SiN film)

(1) methylsilane/$N_2$
(2) methylsilane/$N_2$/Ar or He
(3) methylsilane/$NH_3$
(4) methylsilane/$NH_3$/Ar or He
(5) methylsilane/$N_2$/$NH_3$
(6) methylsilane/$N_2$/$NH_3$/Ar or He

(ii) Constitutive gases of the film forming gas to form the silicon oxy-nitride film (SiON film)

(7) methylsilane/$N_2$/$N_2O$
(8) methylsilane/$N_2$/$N_2O$/Ar or He
(9) methylsilane/$NH_3$/$N_2O$
(10) methylsilane/$NH_3$/$N_2O$/Ar or He
(11) methylsilane/$N_2$/$NH_3$/$N_2O$
(12) methylsilane/$N_2$/$NH_3$/$N_2O$/Ar or He
(13) siloxane/$N_2$/$NH_3$/$N_2O$
(14) siloxane/$N_2$/$NH_3$/$N_2O$/Ar or He
(15) alkoxy compound/$N_2$/$NH_3$/$N_2O$
(16) alkoxy compound/$N_2$/$NH_3$/$N_2O$/Ar or He

In addition to the constitutive gases given in above (7) to (16), oxygen ($O_2$) may be added.

(iii) A constitutive gas of the film forming gas to form the silicon oxide film (SiO film)

(17) methylsilane/$N_2O$

In addition to the constitutive gases given in above (17), oxygen ($O_2$) may be added.

According to the experiment made by the inventors of this application, it was found that the refractive index can be adjusted by controlling a flow rate of $N_2O$ contained in the above film forming gas or controlling a flow rate of Ar or He.

In particular, when the SiON film is formed, the refractive index could be controlled to about 1.4 to 2 by adjusting the flow rate of $N_2O$ in the film forming gases given in above (7) to (16). In more detail, the refractive index became low if the flow rate of $N_2O$ was increased, while the refractive index became high if the flow rate of $N_2O$ was reduced. The reason for this may be supposed as follows. That is, since the electron density in the film is reduced if the oxygen

is increased, the refractive index becomes low. In contrast, since the electron density in the film is increased if the oxygen is lowered, the refractive index becomes high. For this reason, the SiON film can be employed as the core layer and the cladding layer.

On the other hand, the silicon nitride film having the refractive index of about 2 was obtained. Therefore, this film can be employed as the core layer. The silicon oxide film having the refractive index of about 1.4 was obtained. Therefore, this film can be employed as the cladding layer.

Further, if the silicon nitride film, the silicon oxy-nitride film, or the silicon oxide film is brought into contact with the $N_2O$ or $O_2$ plasma, the film quality can be improved. Particularly, if such plasma process is applied to the silicon oxy-nitride film or the silicon oxide film serving as the cladding layer, the lower refractive index can be attained.

Next, examined results will be explained hereunder with respect to a refractive index in-plane distribution and a film thickness in-plane distribution of the silicon-containing insulating film, which is formed by the optical waveguide manufacturing method of the present invention by using the above plasma CVD apparatus.

(1) First Example

As the sample, the silicon nitride film was formed on the substrate subject to film-forming. This silicon nitride film was formed under following film forming conditions by the plasma CVD method.

(Film forming conditions I)

(i) Film forming gas conditions
tetramethylsilane flow rate: 50 sccm
$N_2$ flow rate: 100 sccm
$NH_3$ flow rate: 100 sccm
Ar flow rate: 300 sccm
gas pressure: 1.1 Torr
(ii) Plasmanizing conditions
high-frequency power (13.56 MHz) PRF: 100 W
low-frequency power (380 kHz) PLF: 250 W
(iii) Substrate heating temperature: 300 °C
(iv) silicon nitride film formed (see FIG.3)
film thickness (in-plane): 2.5739 μm±30 nm
refractive index (in-plane): 2.0664± 0.0004
(measure wavelength: 1.55 μm)

As described above, according to the above experiment, the silicon nitride film having the large refractive index of about 2 could be formed by using the above gas mixture, and also the film having a good refractive index distribution and a good film thickness distribution could be obtained. If this silicon nitride film is employed as the core layer, the core layer can have the high refractive index, so that patterns of the optical devices such as the resonator, etc. can be reduced in size. In addition, since the film having the good refractive index distribution and the good film thickness distribution can be obtained, uniformization of device characteristics in the wafer can be achieved.

(2) Second Example

As the sample, like the first example, the silicon oxide film was formed on the substrate subject to film-forming. This silicon oxide film was formed under following film forming conditions by the plasma CVD method.

(Film forming conditions II)

(i) Film forming gas conditions
tetramethylsilane flow rate: 50 sccm
$N_2O$ flow rate: 2000 sccm
gas pressure: 1.0 Torr
(ii) Plasmanizing conditions

high-frequency power (13.56 MHz) PRF: 150 W
low-frequency power (380 kHz) PLF: 300 W
(iii) Substrate heating temperature: 300 °C
(iv) Silicon oxide film formed (see FIG.4)
film thickness (in-plane): 3.00326 μm±30 nm
refractive index (in-plane): 1.4642 ± 0.0006
(measure wavelength: 1.55 μm)

As described above, according to the above experiment, the silicon oxide film having the small refractive index of about 1.4 could be formed by using the above gas mixture, and also the film having the good refractive index distribution and the good film thickness distribution could be obtained.

As described above, if the silicon oxide film or the silicon oxy-nitride film of the present invention is employed as the cladding layer and the silicon nitride film or the silicon oxy-nitride film of the present invention is employed as the core layer, difference in the refractive index between the core layer and the cladding layer can be set to about 0.5 to 0.6. It causes a remarkable reduction of the permeation of the light propagated through the core layer into the cladding layer and the loss.

Also, if above manufacturing methods are combined with each other, both the core layer and the cladding layer can be formed by the plasma CVD method. It causes a facilitated control of the film thickness. It results in not only the reduction in size of the patterns of the optical devices due to the higher refractive index but also the higher integration density and the higher density of the optical integrated circuit device.

(Application to the optical waveguide)

Next, an explanation will be performed hereunder with reference to FIGS.5A and 5B about an example in which the above manufacturing method is applied to the optical waveguide.

FIG.5A is a perspective view showing a configuration of an optical integrated circuit device round a ring resonator. FIG.5B is a sectional view taken along a I-I line in FIG.5A.

As shown in FIG.5A, bus line waveguides 22a, 22b, which intersect with each other, and a ring resonator 23 is provided on the silicon substrate (substrate subject to film-forming) 21. The ring resonator 23 is formed near the intersected portion by shaping the stripe-like waveguide with a width of about 1.5 μm into a ring shape whose diameter is about 20 μm. As shown in FIG.5B, surrounding portions of the bus line waveguides 22a, 22b are covered completely with a lower cladding layer 24. The ring resonator 23 consists of a core layer 23a formed on the lower cladding layer 24, and an upper cladding layer 23b laminated on the core layer 23a. In FIG.5A, the lower cladding layer 24 is omitted.

A part of a circumference of the ring resonator 23 overlaps with the bus line waveguides 22a, 22b, and a resonance wavelength (λ) is decided by

$$n \times \lambda = 2\pi r \times \delta.$$

Where r is a radius of the ring resonator 23, δ is the refractive index of the ring core layer 23a, and n is a positive integer.

If the ring resonator 23 is set to resonate with the light having a wavelength λ2, for example, as shown in FIG. 5A, the wavelength λ2 out of lights (λ0, λ1, λ2, λ3,..., λn), which are input from an input port and whose frequencies are multiplied, is output from a drop port by the ring resonator 23, and also the lights (λ0, λ1, λ3,..., λn), which have other frequencies, are output from a through port.

In the above configuration, the bus line waveguides 22a, 22b are formed of the silicon nitride film or the silicon oxy-nitride film, which has the refractive index of about 2 and has a film thickness of about 0.5 to 0.7 μm, and are formed by using the plasma-enhanced CVD method. Also, the ring core layer 23a is formed of the silicon nitride film or the silicon oxy-nitride film, which has the refractive index of about 2 and has the film thickness of about 1 to 2 μm, and is formed by using the plasma-enhanced CVD method. In addition, the upper cladding layer 23b is formed of the silicon oxide film or the silicon oxy-nitride film, which has the refractive index of about 1.4 and has the film thickness of about 2 to 3 μm, and is formed by using the plasma-enhanced CVD method. The lower cladding layer 24 is formed of the silicon oxide film or the silicon oxy-nitride film, which has the refractive index of about 1.4 and has the film thickness of about 8 μm, and is formed by using the'plasma-enhanced CVD method.

According to the ring resonator 23, since the silicon nitride film or the silicon oxy-nitride film formed by the plasma-enhanced CVD method is employed as the bus line waveguides 22a, 22b and the core layer 23a and the silicon oxide film or the silicon oxy-nitride film is employed as the cladding layers 23b, 24, difference in the refractive index between the core layer and the cladding layer can be increased up to about 0.5 to 0.6. It can cause a remarkable reduction of the permeation of the light propagated through the core layer into the cladding layer and the loss.

Also, uniformization of the optical device characteristics can be achieved by reduction of variation in the refractive index distribution and the film thickness distribution in the bus line waveguides 22a, 22b, the core layer 23a, and the cladding layers 23b, 24.

In addition, miniaturization of the patterns of the bus line waveguides 22a, 22b and the ring resonator 23 can be attained by increase of the refractive indices of the bus line waveguides 22a, 22b and the core layer 23a. As a result, the higher integration density and the higher density of the optical integrated circuit device can be attained.

Further, since both the core layer and the cladding layer can be formed by the CVD method, control of the film thickness of respective layers can be facilitated. As a result, not only the reduction in size of the patterns of the optical devices due to the higher refractive index but also the higher integration density and the higher density of the optical integrated circuit device can be attained.

With the above, the present invention is explained in detail based on the embodiments. But a scope of the present invention is not limited to the examples that are concretely shown in the above embodiments. It should be interpreted that variation and modification of the above embodiments, which do not depart from a gist of the present invention, may be contained in the scope of the present invention.

For example, in the first example, the gas mixture consisting of tetramethylsilane ($Si(CH_3)_4$), $N_2$, $NH_3$, and Ar is employed as the film forming gas applied to the silicon nitride film (SiN film) serving as the core layer, but the film forming gas is not limited to this gas mixture. The combinations shown in FIG.2 may be employed. Also, in place of tetramethylsilane ($Si(CH_3)_4$), other methylsilane, e.g., any one of monomethylsilane ($SiH_3(CH_3)$), dimethylsilane ($SiH_2(CH_3)_2$), or trimethylsilane ($SiH(CH_3)_3$) may be employed.

Also, in the second example, the gas mixture consisting of tetramethylsilane and $N_2O$ is employed as the film forming gas applied to the silicon oxide film (SiO film) serving as the cladding layer, but the film forming gas is not limited to this gas mixture. The combinations shown in FIG.2 may be employed. Also, in place of tetramethylsilane ($Si(CH_3)_4$), other methylsilane, e.g., any one of monomethylsilane ($SiH_3(CH_3)$), dimethylsilane ($SiH_2(CH_3)_2$), or trimethylsilane ($SiH(CH_3)_3$) may be employed.

In addition, as the film forming gas applied to the silicon oxy-nitride film (SiON film) serving as the core layer or the cladding layer, the combinations shown in FIG.2 may be employed. In this case, any one of monomethylsilane ($SiH_3(CH_3)$), dimethylsilane ($SiH_2(CH_3)_2$), trimethylsilane ($SiH(CH_3)_3$), or tetramethylsilane ($Si(CH_3)_4$), for example, may be employed as methylsilane.

Further, in place of methylsilane, alkyl compound having the siloxane bond, e.g., hexamethyldisiloxane (HMDSO: $(CH_3)_3Si\text{-}O\text{-}Si(CH_3)_3$), octamethylcyclotetrasiloxane (OMCTS), or octamethyltrisiloxane (OMTS) may be employed.

Furthermore, in place of methylsilane, alkyl compound having the alkoxy bond, e.g., dimethyldimethoxysilane ($Si(CH_3)_2(OCH_3)_2$), dimethyldiethoxysilane ($Si(CH_3)_2(OC_2H_5)_2$), or trimethoxysilane (TMS: $SiH(OCH_3)_3$) may be employed.

Moreover, the present invention is applied to the optical waveguide through which the signal light having the wavelength of 1.55 μm is propagated, and the refractive index is adjusted to the range between 1.4 and 2. But the present invention is not limited to the above. If the refractive index is adjusted to the appropriate range other than the range between 1.4 and 2, the present invention can be applied to the optical waveguide through which the light having the practical wavelength is propagated.

As described above, according to the present invention, the silicon nitride film serving as the core layer is formed by plasmanizing the gas mixture containing methylsilane and at least any one of nitrogen ($N_2$) or ammonia ($NH_3$) to react.

Therefore, since the core layer has the large refractive index, patterns of the optical devices such as the resonator, etc. can be reduced in size. In addition, since the film having the good refractive index distribution and the good film thickness distribution can be obtained, uniformization of device characteristics in the wafer can be achieved.

Also, the silicon oxy-nitride film serving as the core layer or the cladding layer is formed by plasmanizing the gas mixture containing any one of methylsilane, alkyl compound having the siloxane bond, or alkyl compound having the alkoxy bond, dinitrogen monoxide ($N_2O$), and at least any one of the nitrogen ($N_2$) or the ammonia ($NH_3$) to react. The refractive index of the silicon oxy-nitride film to be formed can be adjusted in the wide range from about 2 to about 1.4 by controlling the flow rate of dinitrogen monoxide ($N_2O$) in the gas mixture having the above constitution. In addition, the film having the good refractive index distribution and the good film thickness distribution can be obtained.

Also, the silicon oxide film serving as the cladding layer is formed by plasmanizing the gas mixture containing methylsilane and dinitrogen monoxide ($N_2O$) to react. The silicon oxide film having the small refractive index of about 1.4 can be formed by using the above gas mixture, and also the film having the good refractive index distribution and the good film thickness distribution can be obtained.

In addition, since the above silicon nitride film or the silicon oxy-nitride film is employed as the core layer and the above silicon oxide film or the silicon oxy-nitride film is employed as the cladding layer, difference in the refractive index between the core layer and the cladding layer can be increased up to about 0.5 to 0.6. Therefore, the permeation

of the light propagated through the core layer into the cladding layer and the loss can be reduced largely.

Also, if above manufacturing methods are used in combination, both the core layer and the cladding layer can be formed by the plasma CVD method. Therefore, control of the film thickness can be facilitated. As a result, not only the reduction in size of the patterns of the optical devices due to the higher refractive index but also the higher integration density and the higher density of the optical integrated circuit device can be attained.

## Claims

**1.** A method of manufacturing an optical waveguide having a core layer (22a), (22b), (23b) and a cladding layer (23a), (24) for covering the core layer (22a), (22b), (23b),

wherein a silicon nitride film serving as the core layer (22a), (22b), (23b) is formed by plasmanizing a gas mixture containing methylsilane and at least any one of nitrogen ($N_2$) or ammonia ($NH_3$) to react.

**2.** A method of manufacturing an optical waveguide, according to claim 1, wherein the gas mixture contains at least any one of He or Ar.

**3.** A method of manufacturing an optical waveguide, according to claim 1, wherein the methylsilane is any one of monomethylsilane ($SiH_3(CH_3)$), dimethylsilane ($SiH_2(CH_3)_2$), trimethylsilane ($SiH(CH_3)_3$), or tetramethylsilane ($Si(CH_3)_4$).

**4.** A method of manufacturing an optical waveguide, according to claim 1, wherein the cladding layer (23a), (24) is brought into contact with a dinitrogen monoxide ($N_2O$) or nitrogen ($N_2$) plasma.

**5.** A method of manufacturing an optical waveguide having a core layer (22a), (22b), (23b) and a cladding layer (23a), (24) for covering the core layer,

wherein a silicon oxy-nitride film serving as the core layer (22a), (22b), (23b) or the cladding layer (23a), (24) is formed by plasmanizing a gas mixture containing any one of methylsilane, alkyl compound having a siloxane bond, or alkyl compound having an alkoxy bond, dinitrogen monoxide ($N_2O$), and at least any one of the nitrogen ($N_2$) or the ammonia ($NH_3$) to react.

**6.** A method of manufacturing an optical waveguide, according to claim 5, wherein a refractive index of the silicon oxy-nitride film is adjusted by controlling a flow rate of dinitrogen monoxide ($N_2O$), or nitrogen ($N_2$) or ammonia ($NH_3$).

**7.** A method of manufacturing an optical waveguide, according to claim 5, wherein the gas mixture contains oxygen ($O_2$).

**8.** A method of manufacturing an optical waveguide, according to claim 5, wherein the gas mixture contains at least any one of He or Ar.

**9.** A method of manufacturing an optical waveguide, according to claim 5, wherein the methylsilane is any one of monomethylsilane ($SiH_3(CH_3)$), dimethylsilane ($SiH_2(CH_3)_2$), trimethylsilane ($SiH(CH_3)_3$), or tetramethylsilane ($Si(CH_3)_4$).

**10.** A method of manufacturing an optical waveguide, according to claim 5, wherein the alkyl compound having the siloxane bond is any one of hexamethyldisiloxane (HMDSO: $(CH_3)_3Si\text{-}O\text{-}Si(CH_3)_3$), octamethylcyclotetrasiloxane (OMCTS), or octamethyltrisiloxane (OMTS).

**11.** A method of manufacturing an optical waveguide, according to claim 5, wherein the alkyl compound having the alkoxy bond is any one of dimethyldimethoxysilane ($Si(CH_3)_2(OCH_3)_2$), dimethyldiethoxysilane ($Si(CH_3)_2(OC_2H_5)_2$), or trimethoxysilane (TMS: $SiH(OCH_3)_3$).

**12.** A method of manufacturing an optical waveguide, according to claim 5, wherein the cladding layer (23a), (24) is brought into contact with a dinitrogen monoxide ($N_2O$) or nitrogen ($N_2$) plasma.

**13.** A method of manufacturing an optical waveguide having a core layer (22a), (22b), (23b) and a cladding layer (23a), (24),

wherein a silicon oxide film serving as the cladding layer (23a) , (24) is formed by plasmanizing a gas mixture containing methylsilane and dinitrogen monoxide ($N_2O$) to react.

**14.** A method of manufacturing an optical waveguide, according to claim 13, wherein a flow rate of dinitrogen monoxide ($N_2O$) is 20 times or more a flow rate of methylsilane.

**15.** A method of manufacturing an optical waveguide, according to claim 13, wherein the gas mixture contains oxygen ($O_2$).

**16.** A method of manufacturing an optical waveguide, according to claim 13, wherein the cladding layer (23a), (24) is brought into contact with a dinitrogen monoxide ($N_2O$) or nitrogen ($N_2$) plasma.

**17.** A method of manufacturing an optical waveguide having a core layer (22a), (22b), (23b) and a cladding layer (23a), (24) for covering the core layer (23b), comprising the steps of:

forming the core layer (22a), (22b), (23b) by the optical waveguide manufacturing method set forth in any one of claims 1 to 4; and
forming a silicon oxide film as the cladding layer (23a), (24) by plasmanizing a gas mixture containing methylsilane and dinitrogen monoxide ($N_2O$) to react.

**18.** A method of manufacturing an optical waveguide having a core layer (22a), (22b), (23b) through which a light is propagated mainly and a cladding layer (23a), (24) for covering the core layer, comprising the steps of:

forming the core layer (22a), (22b), (23b) by the optical waveguide manufacturing method set forth in any one of claims 1 to 4; and
forming a silicon oxide film as the cladding layer (23a), (24) by plasmanizing a gas mixture containing any one of methylsilane, alkyl compound having a siloxane bond, or alkyl compound having an alkoxy bond, dinitrogen monoxide ($N_2O$), and at least any one of nitrogen ($N_2$) or ammonia ($NH_3$) to react.

**19.** A method of manufacturing an optical waveguide having a core layer (22a), (22b), (23b) and a cladding layer (23a), (24) for covering the core layer (22a), (22b), (23b), comprising the steps of:

forming the core layer (22a), (22b), (23b) by the optical waveguide manufacturing method set forth in any one of claims 5 to 12; and
forming a silicon oxide film as the cladding layer (23a), (24) by plasmanizing a gas mixture containing methylsilane and dinitrogen monoxide ($N_2O$) to react.

**20.** A method of manufacturing an optical waveguide having a core layer (22a), (22b), (23b) through which a light is propagated mainly and a cladding layer (23a), (24) for covering the core layer, comprising the steps of:

forming the core layer (22a), (22b), (23b) by the optical waveguide manufacturing method set forth in any one of claims 5 to 12; and
forming a silicon oxide film as the cladding layer (23a), (24) by plasmanizing a gas mixture containing any one of methylsilane, alkyl compound having a siloxane bond, or alkyl compound having an alkoxy bond, dinitrogen monoxide ($N_2O$), and at least any one of nitrogen ($N_2$) or ammonia ($NH_3$) to react.

**21.** An optical waveguide formed by a method of manufacturing an optical waveguide set forth in claim 17.

**22.** An optical waveguide formed by a method of manufacturing an optical waveguide set forth in claim 18.

**23.** An optical waveguide formed by a method of manufacturing an optical waveguide set forth in claim 19.

**24.** An optical waveguide formed by a method of manufacturing an optical waveguide set forth in claim 20.

FIG. 1

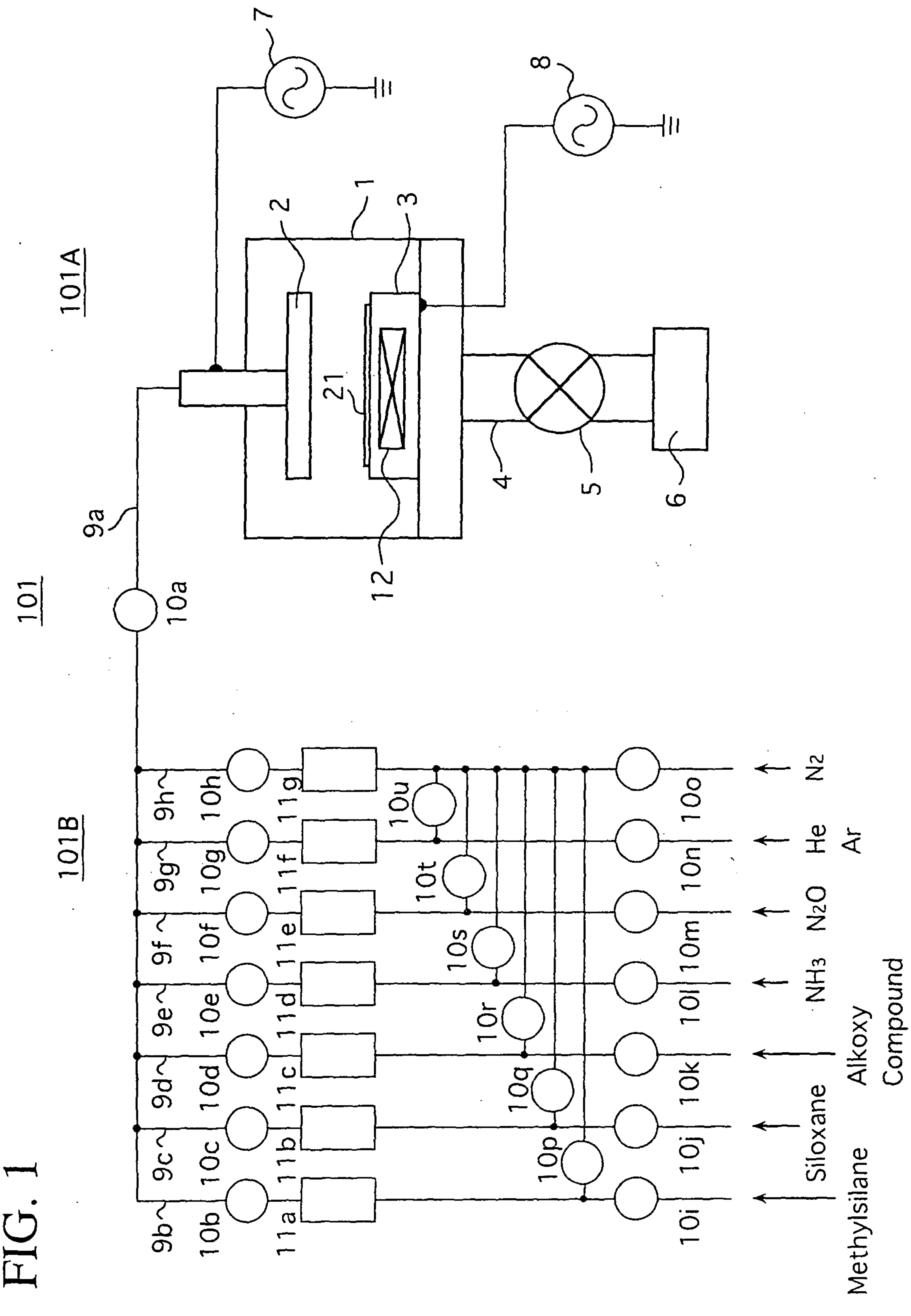
101
101A
101B
1
2
3
4
5
6
7
8
9a
9b
9c
9d
9e
9f
9g
9h
10a
10b
10c
10d
10e
10f
10g
10h
10i
10j
10k
10l
10m
10n
10o
10p
10q
10r
10s
10t
10u
11a
11b
11c
11d
11e
11f
11g
12
21
Methylsilane
Siloxane
Alkoxy Compound
NH3
N2O
He Ar
N2

# FIG. 2

| Formed Film Indication | 1(2) | 3(4) | 5(6) | 7(8) | 9(10) | 11(12) | 13(14) | 15(16) | 17 |
|---|---|---|---|---|---|---|---|---|---|
| Methylsilane | ○ | ○ | ○ | ○ | ○ | ○ | | | ○ |
| Siloxane | | | | | | | ○ | | |
| Alkoxy Compound | | | | | | | | ○ | |
| $N_2$ | ○ | | ○ | ○ | | ○ | ○ | ○ | |
| $NH_3$ | | ○ | ○ | | ○ | ○ | ○ | ○ | |
| $N_2O$ | | | | ○ | ○ | ○ | ○ | ○ | ○ |
| $O_2$ | | | | (○) | (○) | (○) | (○) | (○) | (○) |
| Ar, He | (○) | (○) | (○) | (○) | (○) | (○) | (○) | (○) | |
| Plasma Process | (○) | (○) | (○) | (○) | (○) | (○) | (○) | (○) | (○) |
| Film Constitution | SiN | SiN | SiN | SiON | SiON | SiON | SiON | SiON | SiO |

Note 1) Non-parenthesized numeral in the formed film indication column corresponds to the case where Ar or He is not added, and parenthesized numeral corresponds to the case where Ar or He is added.

Note 2) (○) in the Ar, He column indicates that both cases where Ar or He is added and is not added are contained.

Note 3) (○) in the $O_2$ column indicates that both cases where $O_2$ is added and is not added are contained.

Note 4) (○) in the plasma process column indicates that both cases where the plasma process is applied to the formed film and is not applied to the same are contained.

FIG. 3

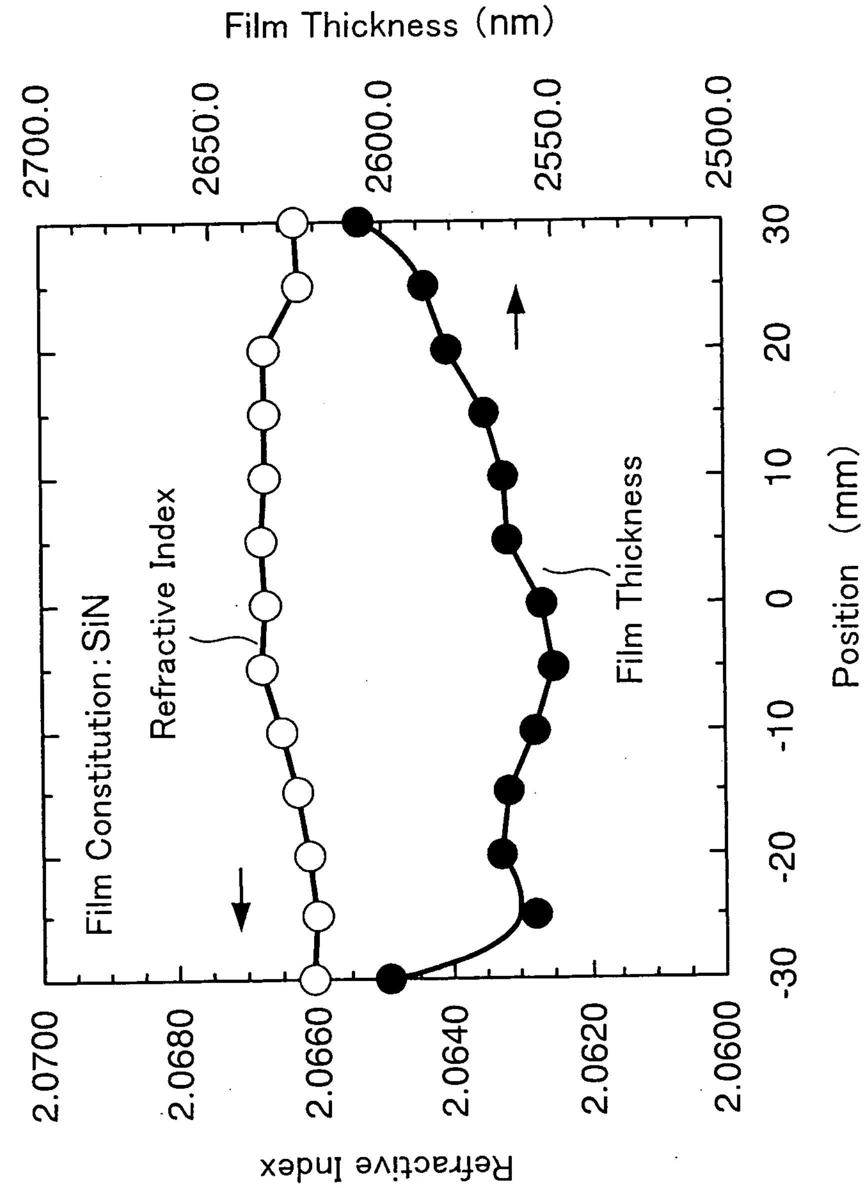
Film Thickness (nm)
2700.0
2650.0
2600.0
2550.0
2500.0
Film Constitution: SiN
Refractive Index
Film Thickness
-30
-20
-10
0
10
20
30
Position (mm)
2.0700
2.0680
2.0660
2.0640
2.0620
2.0600
Refractive Index

FIG. 4

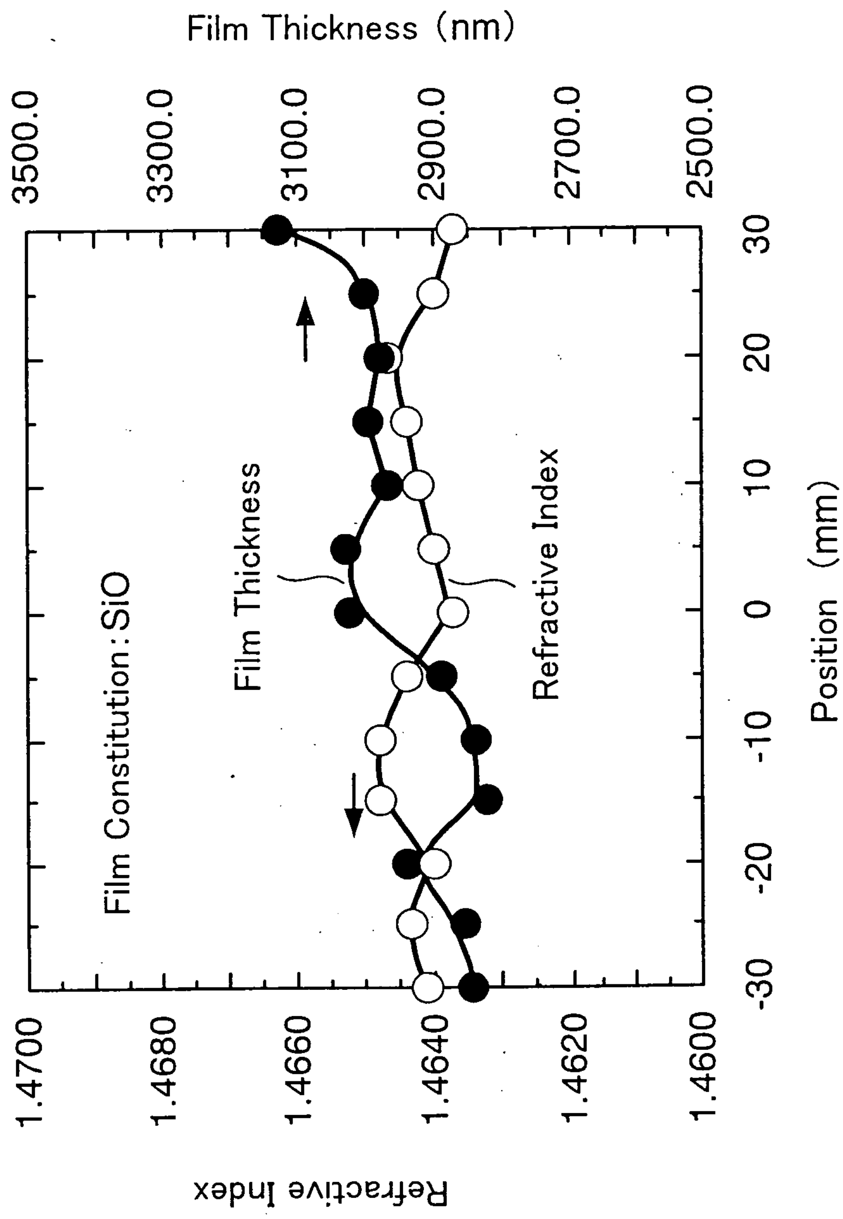
Film Thickness (nm)
3500.0
3300.0
3100.0
2900.0
2700.0
2500.0
Film Constitution: SiO
Film Thickness
Refractive Index
1.4700
1.4680
1.4660
1.4640
1.4620
1.4600
Refractive Index
-30
-20
-10
0
10
20
30
Position (mm)

FIG. 5A

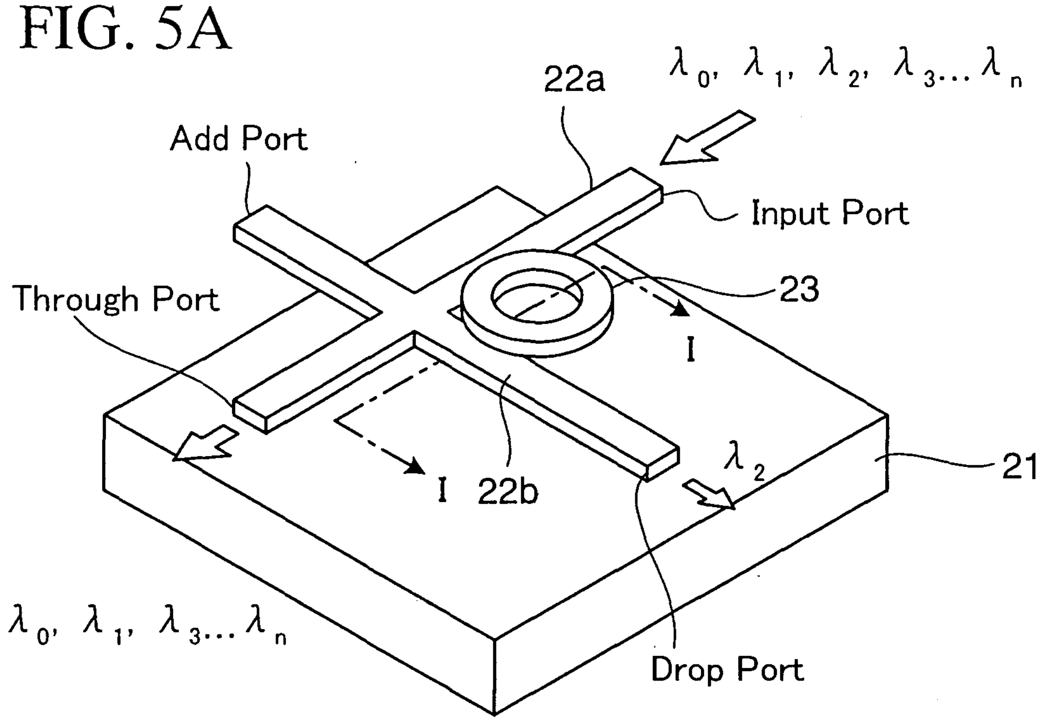
22a
λ0, λ1, λ2, λ3...λn
Add Port
Input Port
Through Port
23
I
21
λ2
I 22b
λ0, λ1, λ3...λn
Drop Port

FIG. 5B

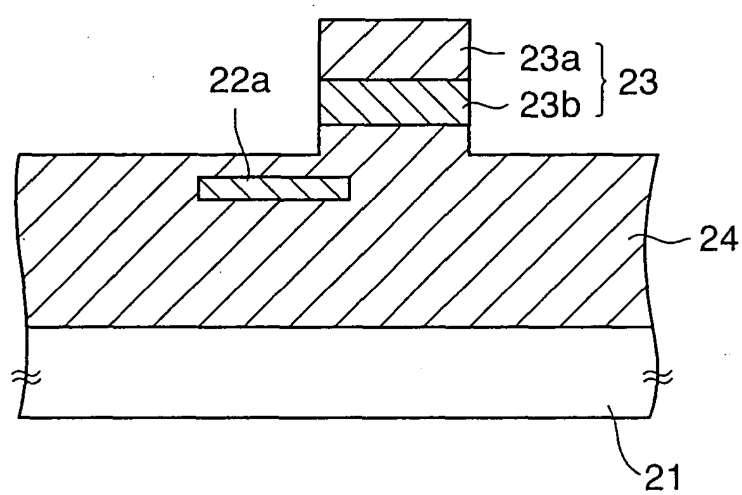
23a
23
23b
22a
24
21